Europäisches Patentamt

European Patent Office

Office européen des brevets

(11) Numéro de publication : **0 480 786 A1**

# (12) DEMANDE DE BREVET EUROPEEN

(21) Numéro de dépôt : **91402458.3**

(22) Date de dépôt : **17.09.91**

(51) Int. Cl.⁵ : **F16D 65/22**

(30) Priorité : **10.10.90 FR 9012483**

(43) Date de publication de la demande :
**15.04.92 Bulletin 92/16**

(84) Etats contractants désignés :
**DE ES FR GB IT**

(71) Demandeur : **BENDIX EUROPE Services Techniques S.A.**
**126 rue de Stalingrad**
**F-93700 Drancy (FR)**

(72) Inventeur : **Monteillet, Jean-Claude, BENDIX EUROPE**
**Service Techniques, 126 rue de Stalingrad**
**F-93700 Drancy (FR)**

(54) **Cage à coin d'écartement et à rouleaux.**

(57) L'invention concerne une cage à coin d'écartement (12) et à rouleaux (14, 16), dont les parois latérales (18, 20) en regard des surfaces non actives du coin (12) comportent des excroissance (26) dans lesquelles sont pratiquées des ouvertures (24) déterminant des surfaces d'appui pour les rouleaux (14, 16).

Selon l'invention, elle comprend un moyen de verrouillage (30) des parois latérales (18, 20) en écartement.

EP 0 480 786 A1

Jouve, 18, rue Saint-Denis, 75001 PARIS

La présente invention concerne une cage à coin d'écartement et à rouleaux destinée notamment à équiper les freins de certains véhicules.

Une telle cage est, par exemple, décrite dans FR-A-2 526 109. De manière classique, une cage comprend un coin mobile sur les surfaces obliques duquel sont susceptibles de rouler deux rouleaux sensiblement parallèles. L'enfoncement du coin entraîne l'écartement des rouleaux perpendiculairement au mouvement du coin. Un tel dispositif est généralement utilisé pour changer la direction d'une force et éventuellement pour l'amplifier, comme dans les freins.

Les rouleaux sont généralement pourvus de tourillons s'appuyant sur des butées fixes constituées par des ouvertures pratiquées dans des excroissances des parois latérales de la cage. Or, le mouvement relatif du coin, des rouleaux et de l'organe actionné n'est pas parfait et des forces erratiques sont appliquées à chaque butée tendant à écarter les parois latérales. Pour éviter cela, ces dernières doivent être particulièrement résistantes et robustes. Il en résulte une cage lourde du fait de l'épaisseur requise des parois latérales et un prix de revient correspondant élevé.

La présente invention a pour but d'obvier à ces inconvénients et de permettre la réalisation d'une cage dont les parois latérales sont en tôle relativement mince.

En outre, pour favoriser la manipulation des cages avant leur mise en place définitive, on interdit aux rouleaux de s'échapper des excroissances par déformation mécanique de ces dernières à la fin de l'opération d'assemblage des cages. Cette étape finale ajoute au prix de revient de telles cages, et il est souhaitable d'éviter cette étape.

Selon l'invention, la cage comprend un moyen de verrouillage des parois latérales en écartement.

Ce moyen de verrouillage comprend, de préférence, un élément entourant les parois latérales de la cage.

L'invention sera mieux comprise et d'autres buts, avantages et caractéristiques de celle-ci apparaîtront plus clairement à la lecture de la description qui suit d'un mode de réalisation donné à titre non limitatif et à laquelle est jointe une planche de dessin sur laquelle :

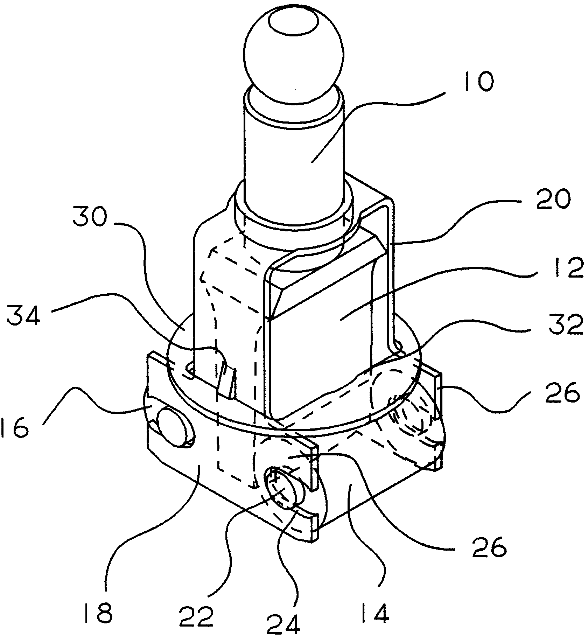

- La Figure unique représente schématiquement en perspective une cage conforme à la présente invention.

En référence maintenant à cette Figure, l'homme du métier reconnaîtra en 10 la tige de poussée du coin 12 et les deux rouleaux 14 et 16, ainsi que les parois latérales 18 et 20.

Chaque rouleau 14, 16 comporte des tourillons d'extrémité 22 prenant appui sur une surface constituée par une ouverture 24 pratiquée dans des excroissances 26 des parois latérales 18, 20.

La cage est pourvue d'un moyen de verrouillage en écartement constitué, dans l'exemple représenté, par une plaque 30 enfilée sur la cage par une ouverture 32 de manière à entourer les parois latérales 18, 20. Cette plaque 30 empêche tout écartement des parois latérales 18, 20.

Cette plaque 20 est elle-même verrouillée à la cage au moyen de becquets 34. Ainsi, toute force tendant à écarter les deux parois latérales est-elle reprise par la plaque. Les parois latérales n'ont donc plus besoin de présenter la robustesse précédemment nécessaire et il en résulte une diminution du prix et du poids de la cage.

En outre, lors de l'assemblage des cages, il devient possible que l'extrémité de l'ouverture 24 soit plus petite que le diamètre des tourillons d'extrémité 22, de manière à favoriser la manipulation des cages avant la mise en place définitive de ces dernières. Les rouleaux sont alors mis en place en écartant d'abord les parois latérales 18, 20 l'une de l'autre pour permettre l'introduction des tourillons d'extrémité 22 dans les ouvertures 24, la plaque de verrouillage 20 venant ensuite fermer l'ensemble.

Bien que l'on ait décrit et représenté ce que l'on considère être le mode préféré de réalisation de l'invention, il est évident que l'homme du métier pourra apporter modifications et changements sans sortir du cadre de l'invention tel que défini par les revendications jointes.

Notamment, la plaque 30 pourra favorablement constituer le fond d'un manchon de protection de l'ensemble. La plaque 30 peut être réduite également à un simple élément de cerclage.

**Revendications**

1. Cage à coin d'écartement (12) et à rouleaux (14, 16), dont les parois latérales (18, 20) en regard des surfaces non actives du coin (12) comportent des excroissance (26) dans lesquelles sont pratiquées des ouvertures (24) déterminant des surfaces d'appui pour les rouleaux (14, 16), caractérisée en ce qu'elle comprend un moyen de verrouillage (30) des dites parois latérales (18, 20) en écartement.

2. Cage à coin d'écartement selon la revendication 1, caractérisée en ce que le dit moyen (30) comprend un élément entourant les dites parois latérales.

3. Cage à coin d'écartement selon la revendication 2, caractérisée en ce que le dit élément est une plaque (30) découpée de manière à présenter une ouverture (32) dans laquelle les dites parois (18, 20) pénètrent.

4. Cage à coin d'écartement selon la revendication 3, caractérisée en ce que la dite plaque est appuyée sur les dites excroissance.

5. Cage à coin d'écartement selon la revendication 4, caractérisée en ce que la dite plaque constitue le fond d'un manchon de protection.

6. Cage à coin d'écartement selon l'une quelconque des revendications précédentes, caractérisée en ce que les dites parois latérales (18, 20) sont pourvues d'un becquet de verrouillage immobilisant le dit moyen de verrouillage.

Office européen
des brevets

**RAPPORT DE RECHERCHE EUROPEENNE**

Numero de la demande

EP    91 40 2458

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-1 434 684 (ROCKWELL-STANDARD CORPORATION) * page 3, colonne de droite, ligne 31 - page 4, colonne de gauche, ligne 48; figures 1-3 * | 1-3 | F16D65/22 |
| Y | | 4,5 | |
| Y | DE-C-3 303 576 (ROCKWELL GOLDE GMBH) * colonne 5, ligne 36 - colonne 6, ligne 1; figure 2 * | 4,5 | |
| A | FR-A-1 292 097 (FABBRICA ITALIANA MAGNETI MARELLI S.P.A.) * page 1, colonne de droite, ligne 26 - ligne 34; figures 1,2 * | 1-3 | |
| A | FR-A-2 322 514 (CENTRAX GEARS LIMITED ET BARR R.H.H.) * page 4, ligne 13 - page 5, ligne 29 * * page 8, ligne 15 - ligne 36 * * figures 1-7,13,14 * | 1,5 | |
| | | | **DOMAINES TECHNIQUES RECHERCHES (Int. Cl.5)** |
| | | | F16D |

Le présent rapport a été établi pour toutes les revendications

| Lieu de la recherche | Date d'achèvement de la recherche | Examinateur |
|---|---|---|
| LA HAYE | 15 JANVIER 1992 | BRAEMS C.G.I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................

& : membre de la même famille, document correspondant

EPO FORM 1503 03.82 (P0462)